# EUROPEAN PATENT APPLICATION

(11) **EP 4 738 167 A1**
(43) Date of publication of application: **06.05.2026**
(21) Application number: 24210161.6
(22) Date of filing: 31.10.2024
(51) Int. Cl.: G06F 21/62, G06F 21/16

(54) **RETRIEVAL-AUGMENTED GENERATIVE SYSTEM AND COMPUTER-IMPLEMENTED METHOD FOR PROTECTING CLASSIFIED INFORMATION IN A RETRIEVAL-AUGMENTED GENERATIVE SYSTEM**

(71) Applicant: Siemens Aktiengesellschaft, 80333 München (DE)
(72) Inventor: Büttner, Florian, 60316 Frankfurt (DE); Yang, Yinchong, 85579 Neubiberg (DE); Störmann, Christof, 81827 München (DE)
(74) Representative: Siemens Patent Attorneys

(57) **Abstract**

Retrieval-augmented generative system comprising
a user interface (21, 41) configured to receive a prompt (22, 42) from a user (28, 48),
a retrieval unit (23, 43) configured to retrieve documents relevant to the prompt (22, 42),
a concealment unit (24, 44) configured to identify at least one document among the retrieved documents comprising restricted information and to mark it being a confidential document,
a large language model unit (25, 45) configured to input all retrieved documents including the at least one marked confidential document into a large language model and to output from the large language model a response containing restricted information and unrestricted information, and
an output interface (27, 47) configured to provide the response (29, 49) comprising the restricted information in a concealed form to a user (28, 48).

## Description

### Field of the Invention

The present disclosure relates to a retrieval-augmented generative system and a computer-implemented method protecting confidential information in a retrieval-augmented generative system.

### Background

Generative artificial intelligence (generative Al) is artificial intelligence capable of generating text, images, videos, or other data using generative models in response to prompts. Generative AI models learn the patterns and structure of their input training data and then generate new data that has similar characteristics. Generative AI and in particular Large Language Models (LLMs) have demonstrated remarkable capabilities in creating relevant outputs to address user queries.

However, current frameworks are rather complicated and opaque systems that are prone to produce unreliable output if users prompt the generative model to generate content that diverges from the training data. For industrial applications using generative AI for supporting monitoring, operation or maintenance of a machine, vehicle, building or power facilities, the output in response to a query needs to be reliable and explainable to get trust into the responses. A known approach to partially overcome such limitations is Retrieval-Augmented-Generation (RAG) where powerful generative models are combined with additional information obtained from a trustworthy knowledge base. Additionally, retrieval-augmented generative (RAG) systems are much more cost efficient since it circumvents the necessity of any fine-tuning steps.

It is also a known issue that LLMs, especially the RAGs, may leak confidential information from retrieved documents. While an intuitive solution would be excluding certain documents from being retrieved results in an incomplete context for LLM, it often results in less qualitative responses due to "unknown unknown". In other words, the end user who reads the response of the LLM doesn't know what he/she doesn't know and may base his/her decision / reaction on such wrong conclusions.

Therefore, it is an object of the present invention to improve the quality of the response without leaking confidential information. It is a further object of the present invention to provide a quality-optimized response depending on the confidentiality level of a user asking for a response.

### Brief Summary of the Invention

This object is solved by the features of the independent claims. The dependent claims contain further embodiment of the invention.

A first aspect concerns a Retrieval-augmented generative system comprising
- a user interface configured to receive a prompt from a user,
- a retrieval unit configured to retrieve documents relevant to the prompt,
- a concealment unit configured to identify at least one confidential document among the retrieved documents comprising restricted information and to mark it being confidential,
- a large language model unit configured to input all retrieved documents including the at least one marked confidential document into a large language model and to output from the large language model a response containing restricted information and unrestricted information, and
- an output interface configured to provide the response comprising the restricted information in a concealed form to a user.

Advantageously, a user is now aware that further information is available to improve the content of the response. The provided response can be assessed with respect to further information which is available but not accessible by the user. This enhances the quality of, and information provided by the response.

In an embodiment the concealment unit is configured to generate a concealed confidential document comprising the restricted information of the confidential document in a concealed form.

This ensures that the RAG system is not able to leak restricted information in the provided response as the restricted information is not input into the large language model unit. The concealed document may contain unrestricted information in clear, i.e., comprehensive form, besides the concealed restricted information and enables the LLM unit to provide a response considering also the unrestricted information of the classified document.

In an embodiment the retrieved documents comprise information about an industrial environment, preferably documents for operating, monitoring or controlling a manufacturing process or manufacturing device.

These retrieved documents provide information, which is very specific to prompts, i.e., question when the RAG system is used in an industrial environment and thus "retrains" the LLM unit efficiently to provide an environment related and thus quality optimized response.

In an embodiment each of the retrieved documents is marked as confidential document depending on a confidentiality level of the user.

Advantageously, this allows the RAG system not only to identify all confidential document among the retrieved documents, but to differentiate the identified confidential documents depending on the confidentiality level of the user. Thus, for a prompt received from a user with high confidential level classified documents which are identified having a confidentiality level lower or equal to the confidentiality level of the user are input to the LLM unit in clear, i.e. unconcealed form. The response output by the LLM unit in return provides more specific information to the prompt than a response output on more comprising more information in concealed form. Thus, the output response is optimized according to the confidentiality level of the user.

In an embodiment the concealment unit comprises a watermarking functionality applying a watermark to each of the confidential documents.

Watermarking methods are already known and can be implemented into the RAG system with low effort concerning programming effort and cost compared to implementing a novel solution for identifying and marking restricted information.

In an embodiment the watermarking functionality reformulates any confidential document leaving the watermark that is parameterized with a seed.

Advantageously, the watermarks are structured according to a specific value of the seed. Thus, the watermark has a predictable form but nevertheless concealing the information by restructuring it.

In a further embodiment a postprocessing functionality is configured to perform a watermarking verification on the response using the seed to detect the watermarks in the response and redacting watermarked information with specific tokens disguising the watermarked information.

This enables an efficient and reliable implementation for concealing the restricted information in the response.

In an embodiment the watermarking functionality and the postprocessing functionality are performed by a large language model.

Advantageously, the LLM is trained to identify a distribution over the vocabulary in the retrieved documents and thus provides the adequate functionality for generating the watermark and verifying the watermark in the confidential documents.

In an embodiment the concealment unit comprises a named entity recognition functionality, which identifies at least one pre-defined category of confidential entities in each of the confidential documents and encodes each of the confidential entities by a label indicating the identified category.

Examples of categories of confidential entities are process-specific or device-specific expressions like a processing entity, values of materials used in the process, or serial number, technical parameters of a device. Thus, dedicated categories of restricted information can easily and efficiently be determined and substituted by the label. The named entity recognition functionality is efficiently applicable to highly structured and concise technical documents

In an embodiment the response is generated having labels instead of the confidential entities and the response is provided to the user interface.

Here the effort for postprocessing is low.

In an embodiment all confidential entities identified as classified are encoded with an extended label indicating the category of the confidential entity and a classification level, which indicates the classification level of the confidential entity, wherein a mapping between each of the confidential entities and the extended label is stored in a table, wherein the response is decoded according to the table depending on the confidentiality level of the user.

This provides means to differentiate the categories of confidential entities with respect to the confidentiality level of the user and enables flexible processing depending on the confidentiality level of the user.

In an embodiment the at least one pre-defined category is specific to the industrial environment, preferably to the industrial process and/or industrial device.

A second aspect concerns a computer-implemented method for protecting classified information in a retrieval-augmented generative system, comprising the steps
- by a user interface, receiving a prompt from a user,
- by a retrieval unit, retrieving documents relevant to the prompt,
- by a concealment unit, identifying at least one document among the retrieved documents comprising restricted information and marking it being a confidential document,
- by a large language model unit, inputting all retrieved documents including the at least one marked confidential document into a large language model and outputting from the large language model a response containing restricted information and unrestricted information, and
- by an output interface, providing the response comprising the restricted information in a concealed form to a user.

The method comprises further steps such that they perform the functionalities claimed for the retrieval-augmented generative system above.

A third aspect concerns a computer program product directly loadable into an internal memory of at least one digital computer, comprising software code portions for performing the above-mentioned steps when said product is run on said at least one digital computer.

### Brief description of the drawings

The invention will be explained in more detail by reference to accompanying figures.
- Figure 1: schematically illustrates a known Retrieval-Augmented Generation (RAG) apparatus.
- Figure 2: schematically illustrates a first embodiment of the inventive Retrieval-Augmented Generation (RAG) system comprising a concealment unit with watermarking functionality.
- Figure 3: schematically illustrates a second embodiment of the inventive Retrieval-Augmented Generation (RAG) system comprising a concealment unit with a named entity recognition functionality.
- Figure 4: schematically illustrates an embodiment of the inventive computer-implemented method by a flow chart.

Throughout this document the expressions Retrieval-Augmented Generation System is shortly named RAG system. RAG system and RAG-based system are used synonymously and are directed to a RAG system which is either applied as a stand-alone apparatus, for instance in an industrial environment or which is combined with further modules into a device for controlling, monitoring, operating or maintaining a machine, a process, vehicle, building, distribution grid or power facilities e.g., an industrial environment.
The phrase "model" is used as a short cut for a machine learning model.

It is noted that in the following detailed description of embodiments, the accompanying drawings are only schematic, and the illustrated elements are not necessarily shown to scale. Rather, the drawings are intended to illustrate functions or components and the co-operation of these functions or components. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional units can be implemented by dedicated hardware, e.g., one or more processor, firmware or by software, and/or by a combination of dedicated hardware and firmware and software. It is further noted that each functional unit described for an apparatus or system can perform a functional step of the related method and vice versa.

### Architecture of a plain RAG apparatus

Large Language Models (LLMs) find a large variety of applications also in the industrial domain. Here, the LLM is enhanced to a Retrieval Augmented Generation (RAG) apparatus, which is much more cost efficient since it circumvents the necessity of any fine-tuning steps.

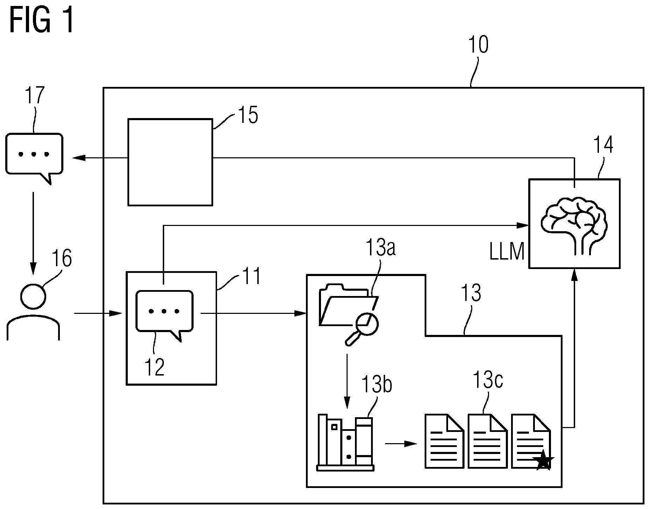

Atypical architecture of a RAG apparatus 10 and its core modules are depicted in Figure 1.

The RAG apparatus 10 consists of user module 11 receiving an input structured in a prompt 12 from a user 16. In contrast to a simple LLM, a retrieval module 13 provides functionalities of topic recognition 13a and document retrieval 13b. This retrieval module 13 identifies the major topics in the prompt 12 of the user 16 and searches a database or library, e.g., comprising a collection of technical manuals, for relevant documents. These retrieved documents 13c are provided as context information to an LLM module 14, which is supposed to formulate a response 17 provided via an output module 15 to the user 16. However, the database 13b for the search and retrieval may consist of documents that are classified for a certain user 16 or user groups. The retrieval module 13 integrates information into the response that a LLM may not have seen during the training, which is extremely efficient since fine-tuning LLM is computationally expensive. However, the LLM may leak restricted information from the classified documents by integrating them in the response.

To prevent this leakage of restricted information one solution would be to exclude certain documents from the retrieval or delete the classified documents form the retrieved documents 13c. This may provide incomplete or incorrect context to the LLM.

Consider a scenario in which certain error reports are available for a specific hardware product at a central database received from a user A which are classified due to data security agreements between the provider of the central server and customer A since it may contain sensitive technical data about the user A's runtime environment. Now a new user B runs into a similar issue with the same hardware product and inputs a respective prompt to the RAG apparatus 10 asking for any related information. This query/prompt triggers a document search based on the keywords at the topic recognition 13a and a set of relevant documents have been retrieved for input into the LLM module 14. Since this new user B only has a lower clearance or has not purchased the full service-package, the classified error report has to be excluded from the retrieved documents. As a result, the LLM module 14 as part of the RAG apparatus 10 would conclude that there have been no similar issues in the past at all, and provide a respective response, which is misleading may be even dangerous.

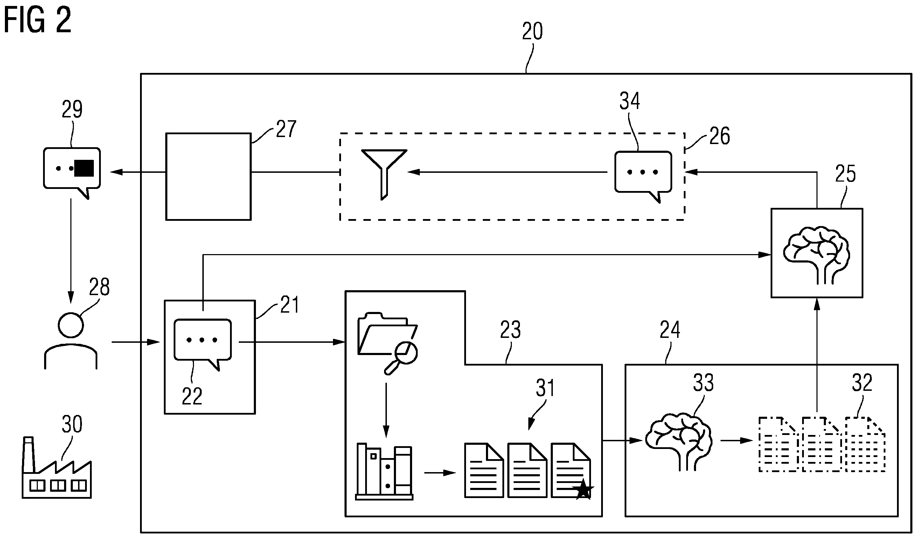

Fig. 2 shows an embodiment of the present invention providing an improved RAG system 20 which improves the quality of response provided to a user without leaking confidential information.

In the scenario described in the introduction of a plain RAG apparatus, the RAG system 20 improves the quality of the response by informing a user, e.g., user B, adequately of the known issue while redacting all restricted information that user A has not agreed to share. This approach has two major advantages:
First, user B is now aware that this is a known issue and solutions to fix the issue are already available. This is a vital piece of information that could facilitate an efficient solution. This can be seen as transforming the "unknown unknown" into "known unknown" from the perspective of user B.

Second, this incomplete information may incentivize a user like user B to apply a higher confidentiality level which qualifies for accessing confidential documents having a higher classification level, e.g., comprising all error reports, maintenance logs, and furthermore. On the other side, user such as user A could be incentivized to provide more "sensitive" information in its reports, i.e., restricted information raising the confidential document to a higher classification level for a certain amount of provision that depends on the frequency that his report is queried by the RAG system. This makes even such more "sensitive" information accessible to other users.

The improved RAG system 20 depicted in Fig. 2 is described in the following in more detail.

The improved RAG system 20 comprises a user interface 21 configured to receive a prompt 22 from a user and inputs the prompt 22 into a retrieval unit 23. The retrieval unit 23 is configured to analyse the prompt 22 identifying one or several topics it concerns to. The retrieval unit 23 retrieves documents 31 relevant to the prompt 22. The RAG system 20 further comprises a concealment unit 24 configured to identify at least one document among the retrieved documents 31 comprising restricted information and to mark it being a confidential document 32.

The RAG system 20 further comprises a large language model unit 25 configured to input all retrieved documents 31 including the at least one marked confidential document 32 into a large language model. Thus, all retrieved documents are provided to the LLM unit 25 comprising the documents without classification and confidential documents containing restricted information. The LLM unit 25 outputs a response 29 containing restricted information and unrestricted information. To prevent leaking restricted information, an output interface 27 is configured to provide the response comprising the restricted information in a concealed form to a user 28.

Concealed information is information, which is redacted, e.g., by substituting it by untransparent bars or other substituting the restricted information by labels or omitting the restricted information without any substitute.

In an embodiment, each of the retrieved documents is marked as confidential document depending on a confidentiality level of the user 28 inputting the prompt 22 into the RAG system 20. The confidentiality level of the user 28 can be introduced into the RAG system 20 for instance during a registration process or when inputting the prompt 22. A confidential document comprises restricted information. Restricted information is to be understood as information, which is not allowed to be provided in clear, readable form to a user. The confidentiality level of a user is assigned due to a position, task or security level of the user. The confidentiality level can also be assigned of the user due to a payment, licence or other administrational regulation. Thus, the same document may be classified as confidential document for the prompt 22 if the user 28 has a low confidentiality level, but it is classified as not-confidential document, if the user has a higher confidentiality level.

In an embodiment the concealment unit 24 is configured to generate a concealed confidential document comprising the restricted information of the confidential document in a concealed form. This means, that the confidential documents are not transferred in clear form to the LLM unit 25. The restricted information in the confidential documents is redacted such that no restricted information is input in clear form into the LLM unit 25.

In a preferred approach the concealment unit 24 comprises a watermarking functionality generating a watermark in each of the confidential documents. This solution is based on state-of-the-art watermarking algorithms performed by an LLM, e.g., as described by Kirchenbauer, John, et al. "A watermark for large language models." International Conference on Machine Learning. PMLR, 2023. This solution is applicable preferably for documents written in prose, e.g. manuals of technical devices, technical articles, or non-technical documents, since watermarking heavily relies on using alternate tokens to leave a watermark. This may be problematic in those technical documents where the precise word choice is vital. Token is a basic unit of text that the model processes. In the context of Large Language Models (LLMs). Tokens can be as small as a single character, a part of a word, or a whole word, depending on the tokenization method used.

The concealment comprises a second LLM that performs watermarking, which reformulates any confidential document and leaves a watermark that is parameterized with a seed, e.g., a random seed. Specifically, the distribution over a vocabulary is slightly manipulated at generation of each single word, by increasing the probability of a random subset of "green" tokens and reducing the probability of the complement, denoted as the "red" tokens. The random seed for binary splitting the vocabulary, which may consist of a user-defined hash of the preceding tokens, holds the key to verifying the watermarking in generated text. It has been shown that simple statistical tests are enough to perform such detection to a satisfactory degree.

As illustrated in Fig. 2, the retrieval unit 23 performs a query at an assigned database and returns a set of retrieved documents 31 that may be interesting for building a context for the prompt 22. The retrieved documents 31 are forwarded to the concealment unit 24. The concealment unit 24 identifies the confidential documents. The retrieved documents may already be marked as confidential and identified by e.g., an assigned label indicating the confidentiality level. In an embodiment the concealment unit 24 evaluates the confidentiality level itself, e.g., applying a classification machine learning model and assigns the respective confidentiality label.

The retrieved documents 31 are classified, i.e., confidential documents, and shall not be exposed to the user 28 who has submitted the prompt 22. Instead of removing the confidential document 31, it is applied a second LLM 33 to reformulate the confidential document while leaving a specific, reproducible watermark. The second LLM 33 in the concealment unit 24 and LLM functionality in the LLM unit 25, also called main LLM, are granted access to all retrieved documents 31, including the reformulated confidential document. Thus, the LLM unit 25 is free to generate a preliminary response 34 of optimized, best possible quality.

To eliminate restricted information, which may still be apparent in the preliminary response 34, a postprocessing functionality 26 is configured to perform a watermarking verification on the preliminary response 34 using the seed to detect the watermarks in the preliminary response 34 and redacting watermarked information with specific tokens disguising the watermarked information. The watermarking functionality and the postprocessing functionality 26 are performed by the second large language model 33. In an embodiment the second large language model is integrated into the LLM functionality of the LLM unit 25.

The RAG system 20 is configured to handle retrieved documents comprising information about an industrial environment 30, preferably about operating, monitoring or controlling a manufacturing process or manufacturing device.

A fictive example of watermarking is shown below generated for a confidential document, e.g., an error report submitted from user A in above-described scenario, by a watermarking algorithm executed on an LLM functionality according to ChatGPT-3.5.

### Original confidential document without watermarking:

### "Intermittent Connectivity Issues:

Description: QuantumDrive 9000 experienced intermittent connectivity issues, leading to frequent disconnections from the host system.

Duration: Error persisted for 2 weeks.

Temporary Fix: User applied a workaround by resetting the PCIe link through the operating system. Performance Impact: Average data transfer rate dropped by 30%, resulting in prolonged processing times.

After Temporary Fix: Connectivity issues mitigated, data transfer rates restored to near-normal levels with occasional brief interruptions."

### Watermarked text, reformulated text, i.e., restricted information, is underlined:

### "Intermittent Connectivity Issues:

Description: The QuantumDrive 9000 *encountered irregular link problems. resulting in frequent disconnections from the primary system.*

Duration: The issue persisted *for* a *span of two weeks.*

Temporary Fix: *A user implemented a temporary solution by initiating* a *reset of the PCIe connection through the operating system.*

Performance Impact: *The average data transfer rate experienced a decline of 30%, leading to extended processing durations.*

After Temporary Fix: The connectivity issues were *alleviated, and data transfer rates returned to nearly standard levels, albeit with sporadic brief interruptions."*

In the example above, the restricted information is detected since the tokens follow a different vocabulary distribution. This allows us to redact the reformulated text.

### Confidential document in a concealed form Watermarked text, redacted:

### "Intermittent Connectivity Issues:

Description: The QuantumDrive 9000
Duration: The issue persisted
Temporary Fix: A
Performance Impact: The
After Temporary Fix: The connectivity issues were

Due to the discussed challenge in technical domain that under circumstances there's very limited choice of tokens, the watermarking may underperform. For instance, for very specific technical terms the watermarking may fail because even manipulated vocabulary distribution does not change the outcome of the token sampling at generation of the watermark. In such cases, the limited or missing watermarking may result in leakage of restricted information in the final response 39 which is output via output interface 27. A quick remedy is to perform a post-hoc interpolation between watermarked text blocks. For instance, if one observes a very small un-watermarked text block between two larger watermarked blocks, then it is likely that it's a false negative. However, to provide a more reliable solution for documents with more technical content, a second embodiment is proposed using entity recognition.

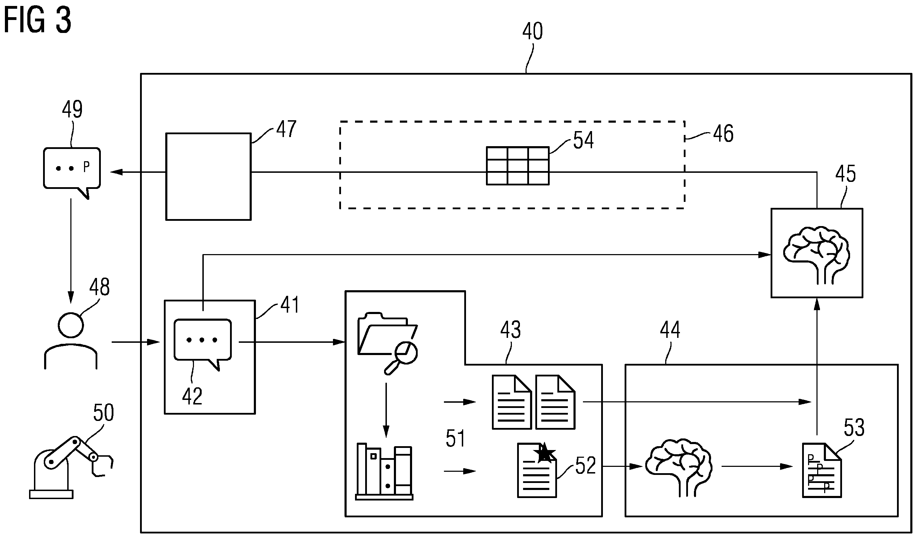

Fig. 3 shows the second embodiment of a RAG system 40. Units or functional steps which are not explicitly mentioned are configured and performed as described for the first embodiment shown in Fig. 2.

The RAG system 40 comprises a user interface 41 receiving a prompt 42 from a user 48. The RAG system 40 is preferably configured to be applied in an industrial environment 50 comprising a LLM unit 45 providing a response 49 via output unit 47 to prompts concerning technical topics. The RAG system 40 comprises a retrieval unit 43 retrieving technical documents in tabular or other non-prose form. The RAG system 40 comprises a concealment unit 44 applying a named entity recognition functionality, which identifies at least one pre-defined category of confidential entities in each of the confidential documents and encodes each of the confidential entities by a label indicating the identified category. Encoding means here attaching to each of the confidential entities an identifier indicating the identified category, e.g., as a string.

Entity Recognition, preferably Named Entity Recognition (NER) is an established technique from earlier Natural Language Processing research and the known methods achieve performance close to human annotation, see for example a publication of Jenny Rose Finkel, Trond Grenager, and Christopher Manning. "Incorporating Non-local Information into Information Extraction Systems by Gibbs Sampling". ACL 2005.

Given some text data such as sentences, the NER is able to assign to each token in the sentence one of a pre-defined category of possible entities such as "person", "location", "date", and furthermore. An example for the encoding according to NER is shown below:
NER Input: Jim bought 300 shares of Acme Corp. in 2006.

NER Output: [Jim]Person bought [300] amount shares of [Acme Corp.]Organization in [2006]Time.

The concealment unit 44 performs a NER on those documents 52 which are identified as confidential of all retrieved documents 51 and replaces all tokens that are assigned to a category which is assumed or pre-defined to be sensitive. For instance, all tokens of the category "number" are replaced with a special token "<category:number>". In the example above would be concealed masked as:
Jim bought <category:number> shares of Acme Corp. in 2006.

All documents, which are not identified being confidential documents as well as such concealed confidential documents 53 are transferred to the LLM unit 45 and input to the LLM functionality. Since the restricted information is already concealed and marked in the context, it is impossible for the LLM unit 45 to leak any of such restricted information. In fact, the LLM unit 45 will simply reproduce the special tokens such as "<category:number>" in its final generation, which explicitly makes the user 48 aware that there's certain information he/she has no access to. A response 49 generated by the LLM unit 45 comprises labels instead of the confidential entities and is provided via output interface 47 to the user 48 comprises the restricted information, i.e., the confidential entities marked as "P".

### The same fictive example as show above would look like this:

### Original generation with named entity recognition:

### "Intermittent Connectivity Issues:

Description: QuantumDrive 9000 experienced intermittent connectivity issues, leading to frequent disconnections from the host system.

Duration: Error persisted for <category:duration>.

Temporary Fix: User applied a workaround by resetting the <category:siemens-product-class> through the <category: siemens-technical-term >.

Performance Impact: Average <category:siemens-technical-term> dropped by <category:proportion>, resulting in prolonged <category:siemens-technical-term>.

After Temporary Fix: Connectivity issues mitigated, <category:siemens-technical-term> restored to near-normal levels with occasional <category:siemens-technical-term>."

In an embodiment all confidential entities identified as classified are encoded with an extended label indicating the category of the confidential entity and a classification level, which indicates the classification level of the confidential entity. A mapping between each of the confidential entities and the extended label is stored in a mapping table 54 in a preprocessing unit 46. The response is decoded according to the mapping table depending on the confidentiality level of the user. A cconfidentiality level of the user 48 can comply with the classification levels assigned to the restricted documents or preferably to all retrieved documents. Alternatively, a separate mapping between the confidentiality level of the user 48 and the classification levels can be defined. The at least one pre-defined category is specific to the industrial environment 50 it is applied in, preferably to the industrial process and/or industrial device.

For instance, all entities identified as classified/restricted are encoded into a string consisting of the category and an ID. The mapping between the original information, i.e., entity and the extended label will be stored in the mapping table 54 that is used to decode the LLM response in case that a user has enough clearance, i.e., the user has a confidentiality.

The RAG system 40 allows its provider full control over the categories and enables specifying categories that fits the needs of each product, such as the provider defined category "<category:productXspecific-technical-term>". For another product / service / use case, categories like date or price information can be defined to be concealed. In comparison with the watermarking and redacting approach, the concealment approach using NER would typically expose more information to the user in the final response, giving him already some hint of what the actual fact may look like yet redacting all relevant information that would prevent him from e.g. reproducing the solution.

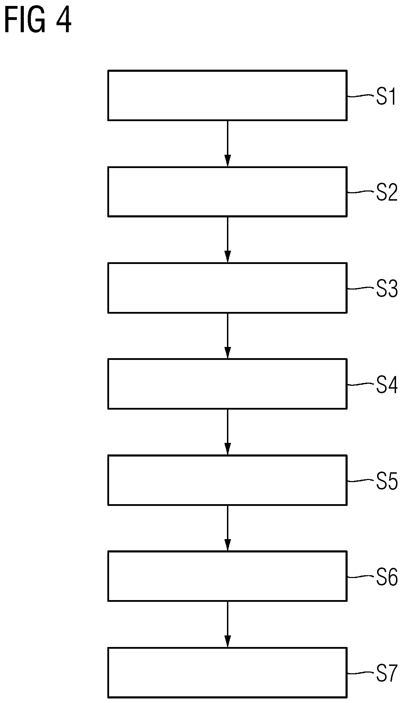

Fig. 4 shows an embodiment of a computer-implemented method comprising all steps performed by the described RAG systems 20, 40.

The computer-implemented method for protecting classified information in a retrieval-augmented generative system 20, 40 comprises the steps of receiving S1 a prompt from an user by a user interface. In step S2 documents relevant to the prompt are retrieved by a retrieval unit. At least one document is identified among the retrieved documents comprising restricted information, see S3 and marked, see S4 being a confidential document by a concealment unit. All retrieved documents including the at least one marked confidential document is input into a large language model contained in a large language model unit, see S5. A response containing restricted information and unrestricted information is output from the large language model, see S6. The response comprising the restricted information in a concealed form is provided to a user by an output interface, see step S7.

Another aspect of the invention concerns a computer program product which is directly loadable into the internal memory of a digital computer, comprising software code portions for performing the steps the method when said product is run on said digital computer.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Retrieval-augmented generative system comprising
- a user interface (21, 41) configured to receive a prompt (22, 42) from a user (28, 48),
- a retrieval unit (23, 43) configured to retrieve documents relevant to the prompt (22, 42),
- a concealment unit (24, 44) configured to identify at least one document among the retrieved documents comprising restricted information and to mark it being a confidential document,
- a large language model unit (25, 45) configured to input all retrieved documents including the at least one marked confidential document into a large language model and to output from the large language model a response containing restricted information and unrestricted information, and
- an output interface (27, 47) configured to provide the response (29, 49) comprising the restricted information in a concealed form to a user (28, 48).

2. Retrieval-augmented generative system according to claim 1, wherein the concealment unit (24, 44) is configured to generate a concealed confidential document comprising the restricted information of the confidential document in a concealed form.

3. Retrieval-augmented generative system according to any of the preceding claims, wherein the retrieved documents comprise information about an industrial environment (30, 50), preferably information for operating, monitoring or controlling a manufacturing process or manufacturing device.

4. Retrieval-augmented generative system according to any of the preceding claims, wherein each of the retrieved documents is marked as confidential document depending on a confidentiality level of the user (28, 48).

5. Retrieval-augmented generative system according to any of the preceding claims, wherein the concealment unit (24, 44) comprises a watermarking functionality applying a watermark to each of the confidential documents.

6. Retrieval-augmented generative system according to claim 5, wherein the watermarking functionality reformulates any confidential document leaving the watermark that is parameterized with a seed.

7. Retrieval-augmented generative system according to claim 5 or 6, wherein a postprocessing functionality (26, 46) is configured to perform a watermarking verification on the response using the seed to detect the watermarks in the response and redacting watermarked information with specific tokens disguising the watermarked information.

8. Retrieval-augmented generative system according to any of claims 5 to 7, wherein the watermarking functionality and the postprocessing functionality (26, 46) are performed by a large language model.

9. Retrieval-augmented generative system according to any of claims 1 to 4, wherein the concealment unit (24, 44) comprises a named entity recognition functionality, which identifies at least one pre-defined category of confidential entities in each of the confidential documents and encodes each of the confidential entities by a label indicating the identified category.

10. Retrieval-augmented generative system according to claim 9, wherein the response (29, 49) is generated having labels instead of the confidential entities and the response is provided to the user interface.

11. Retrieval-augmented generative system according to any of claim 9 and 10, wherein all confidential entities are encoded with an extended label indicating the category of the confidential entity and a classification level, which indicates the classification level of the confidential entity, wherein a mapping between each of the confidential entities and the extended label is stored in a table, wherein the response is decoded according to the table depending on the confidentiality level of the user (28, 48).

12. Retrieval-augmented generative system according to claim 9 or 11, wherein the at least one pre-defined category is specific to the industrial environment (30, 50), preferably to the industrial process and/or industrial device.

13. Computer-implemented method for protecting classified information in a retrieval-augmented generative system, comprising the steps
- by a user interface, receiving (S1) a prompt from a user,
- by a retrieval unit, retrieving (S2) documents relevant to the prompt,
- by a concealment unit, identifying (S3) at least one document among the retrieved documents comprising restricted information and marking (S4) it being a confidential document,
- by a large language model unit, inputting (S5) all retrieved documents including the at least one marked confidential document into a large language model and outputting (S6) from the large language model a response containing restricted information and unrestricted information, and
- by an output interface, providing (S7) the response comprising the restricted information in a concealed form to a user.

14. Computer-implemented method according to claim 13, comprising steps performed by a retrieval-augmented generative system according to claims 1 to 12.

15. A computer program product directly loadable into the internal memory of a digital computer, comprising software code portions for performing the steps of claim 13 to 14 when said product is run on said digital computer.
